# EUROPÄISCHE PATENTSCHRIFT

(11) **EP 0 355 682 B1**
(45) Veröffentlichungstag und Bekanntmachung des Hinweises auf die Patenterteilung: **15.06.1994**
(21) Anmeldenummer: 89115075.7
(22) Anmeldetag: 16.08.1989
(51) Int. Cl.: C08G 18/08, C08G 18/28, C09D 175/04

(54) **Verwendung von Polyurethanharzen für wässrige Füllerzusammensetzungen**
Use of polyurethane resins in aqueous filler compositions
Utilisation de résines de polyuréthanes pour compositions aqueuses de charges

(30) Priorität: 19.08.1988 DE 3828157
(43) Veröffentlichungstag der Anmeldung: 28.02.1990
(73) Patentinhaber: HOECHST AKTIENGESELLSCHAFT, 65926 Frankfurt am Main (DE)
(72) Erfinder: Schwab, Michael, Dr., D-6502 Mainz-Kostheim (DE); Walz, Gerd, Dr., D-6200 Wiesbaden (DE)

(56) Entgegenhaltungen:
- EP-A- 0 219 677
- EP-A- 0 228 003
- EP-A- 0 269 972
- EP-A- 0 304 718
- US-A- 4 522 986

## Beschreibung

Füllerzusammensetzungen werden vor allem in der Fahrzeugindustrie als Schicht zwischen Grundierung und Decklack aufgebracht und dienen einerseits zum Ausgleich von Unregelmäßigkeiten in der Grundierung, wodurch ein einwandfreies Aussehen des Decklackes gewährleistet werden soll, andererseits zur Verbesserung des Steinschlagschutzes der Gesamtlackierung. Durch ein plastisches Verhalten soll diese Schicht ein Durchschlagen der Streusplittpartikel, u.ä., wie sie von fremden Fahrzeugen oder auch vom eigenen Fahrzeug gegen die Lackierung geschleudert werden, verhindern. Auf der anderen Seite müssen die Füllerzusammensetzungen relativ harte Filme liefern, um die Naßschleifbarkeit der Lackierung zu ermöglichen, ohne daß sich dabei das Schleifpapier zusetzt.

In der EP-A 249 727 werden umweltfreundliche Füllerzusammensetzungen auf Wasserbasis (sog. "Wasser-" oder "Hydrofüller") beschrieben, die als Bindemittel eine Mischung aus wasserverdünnbarem Polyesterharz, wasserlöslichem Epoxidharz-Phosphor(n)säureester und einem Melaminharz enthalten. Die Verarbeitbarkeit und das Eigenschaftsprofil dieser Füllerzusammensetzungen bzw. der daraus erhältlichen Filme sind insgesamt recht gut, jedoch befriedigen u.a. die Steinschlagfestigkeit, insbesondere bei tieferen Temperaturen (< 0°C), und die Zwischenschichthaftung, insbesondere zum Decklack, nicht in allen Fällen.

Aus EP-A-0 219 677 sind wäßrige Polyurethan-Dispersionen bekannt, die durch Umsetzung eines Isocyanat-terminierten Prepolymers mit Polyaminen erhalten werden. Diese Polyamine enthalten isocyanat-reaktive Gruppen gleicher Reaktivität und dienen zur Kettenverlängerung der Prepolymeren.

Es wurde nun gefunden, daß wäßrige Füllerzusammensetzungen auf Basis von bestimmten, in Wasser dispergierbaren Polyurethanharzen diese Nachteile nicht aufweisen.

Die Erfindung betrifft daher die Verwendung eines wasserdispergierbaren Polymeren als Bindemittel in einer wäßrigen Füllerzusammensetzung, die gegebenenfalls neben weiteren polymeren Bindemitteln, Vernetzungsmittel und übliche Additive enthält, dadurch gekennzeichnet, daß das wasserdispergierbare Polymere ein Polyurethanharz ist, das erhalten wird durch Umsetzung von
(A) Polyisocyanaten,
(B) Polyolen mit einem mittleren Molekulargewicht Mₙ, von mindestens 400,
(C) gegebenenfalls Polyolen mit einem Molgewicht von 60 bis 400,
(D) Verbindungen, die mindestens zwei gegenüber Isocyanatgruppen reaktive Gruppen und mindestens eine zur Anionenbildung befähigte Gruppe aufweisen,
unter Bildung eines Polyurethan-Präpolymeren, das im Mittel mindestens 1,7 freie Isocyanatgruppen pro Molekül enthält, dieses Präpolymer dann in einem nichtwäßrigen System mit Verbindungen (E) und gegebenenfalls (F) umsetzt und das vollständig ausreagierte Polyurethanharz anschließend neutralisiert und in ein wäßriges System überführt oder zuerst in ein wäßriges System überführt und dann neutralisiert,
wobei die Verbindungen (E) entweder
e1) Hydroxyl- und Carbonylgruppen enthalten, oder
e2) Amino- und Hydroxylgruppen enthalten, oder
e3) gewählt werden aus 3-Amino-1-Methylaminopropan,
   3-Amino-1-Ethylaminopropan,
   3-Amino-1-cyclohexylaminopropan, oder
   3-Amino-1-Methylaminobutan,
und die Verbindungen (F) Wasser, Hydrazin oder von (D) und (E) verschiedene Di- oder Polyamine darstellen.

Das erfindungsgemäß verwendete Polyurethanharz besitzt im allgemeinen ein mittleres Molekulargewicht M̅ₙ (aus der Stöchiometrie des Ausgangsmaterials berechnet) von 1600 bis 50000, vorzugsweise 1600 bis 10000 und insbesondere 2000 bis 6000, eine Särezahl von 10 bis 80, vorzugsweise 25 bis 60 und eine Hydroxylzahl von 30 bis 150, vorzugsweise 30 bis 80. Es ist zumindest im alkalischen Milieu wasserdispergierbar und bei niedrigen Molekulargewichten unter diesen Bedingungen häufig sogar wasserlöslich. Im allgemeinen sind die Molekülketten dieses Polyurethanharzes überwiegend linear aufgebaut, jedoch kann in manchen Fällen ein geringfügiger Verzweigungsgrad von vorzugsweise bis zu 30 %, insbesondere bis zu 10 % von Vorteil sein. Sein Gelanteil liegt im allgemeinen bei kleiner als 5 Gew.-%, vorzugsweise kleiner als 1 Gew.-%. Im statistischen Mittel enthält jede Polymerkette vorzugsweise mindestens zwei, insbesondere 4 bis 6 Gruppen mit aktivem Wasserstoff, wie Amino- und/oder OH-Gruppen.

Bei den Polyisocyanaten, vorzugsweise Diisocyanaten (A) handelt es sich um die auf dem Polyurethan- bzw. Lackgebiet bekannten Verbindungen, wie aliphatische, cycloaliphatische oder aromatische Diisocyanate. Diese besitzen vorzugsweise die Formel Q(NCO)₂, wobei Q für einen Kohlenwasserstoffrest mit 4 bis 40 C-Atomen insbesondere 4 bis 20 C-Atomen steht und vorzugsweise einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen bedeutet. Beispiele derartiger bevorzugt einzusetzender Diisocyanate sind Tetramethylendiisocyanat, Hexamethylendiisocyanat, Dodecamethylendiisocyanat, 1,4-Diisocyanatocyclohexan, 3-Isocyanatomethyl-3,5,5-trimethylcyclohexylisocyanat (Isophorondiisocyanat), 4,4'-Diisocyanatodicyclohexylmethan, 4,4'-Diisocyanatodicyclohexylpropan-(2,2), 1,4-Diisocyanatobenzol, 2,4- oder 2,6-Diisocyanatotoluol bzw. Gemische dieser Isomeren, 4,4'- oder 2,4'-Diisocyanatodiphenylmethan, 4,4'-Diisocyanatodiphenylpropan-(2,2), p-Xylylendiisocyanat und a,a,a',a',-Tetramethyl-m- oder p-Xylylendiisocyanat sowie aus diesen Verbindungen bestehende Gemische.

Neben diesen einfachen Polyisocyanaten sind auch solche geeignet, die Heteroatome in dem die Isocyanatgruppen verknüpfenden Rest enthalten. Beispiele hierfür sind Polyisocyanate, die Carbodiimidgruppen, Allophonatgruppen, Isocyanuratgruppen, Urethangruppen, acylierte Harnstoffgruppen oder Biuretgruppen aufweisen. Bezüglich weiterer geeigneter Polyisocyanate sei beispielsweise auf die DE-A 2928 552 verwiesen.

Der Anteil an Polyisocyanaten (A) in dem Polyurethanharz liegt in der Regel bei ca. 10 bis 50 Gew.-%, vorzugsweise 25 bis 35 Gew.-%, bezogen auf das Polyurethanharz.

Die Polyole gemäß (B) besitzen vorzugsweise ein mittleres Molekulargewicht M̅ₙ von 400 bis 5000, insbesondere 800 bis 2000. Ihre Hydroxylzahl beträgt im allgemeinen 30 bis 280, vorzugsweise 50 bis 200 und insbesondere 80 bis 160 mg/KOH/g.

Beispiele für derartige Polyole, bei denen es sich um die aus der Polyurethanchemie bekannten Verbindungen handelt, sind Polyetherpolyole, Polyesterpolyole, Polycarbonatpolyole, Polyesteramidpolyole, Polyamidpolyole, Epoxidharzpolyole und deren Umsetzungsprodukte mit CO₂, Polyacrylatpolyole udgl.. Derartige Polyole, die auch in Mischung eingesetzt werden können, sind beispielsweise in den DE-A 2 020 905, 2 314 513 und 3 124 784 sowie in der EP-A 120 466 beschrieben.

Von diesen Polyolen sind die Polyether- und Polyesterpolyole bevorzugt, insbesondere solche, die nur endständige OH-Gruppen aufweisen und eine Funktionalität von kleiner als 3, vorzugsweise von 2,8 bis 2 und insbesondere von 2 besitzen.

Als Polyetherpolyole sind hier beispielsweise Polyoxyethylenpolyole, Polyoxypropylenpolyole, Polyoxybutylenpolyole zu nennen und vorzugsweise Polytetrahydrofurane mit endständigen OH-Gruppen.

Die erfindungsgemäß besonders bevorzugten Polyesterpolyole sind die bekannten Polykondensate aus Di- sowie gegebenenfalls Poly(Tri,Tetra)olen und Di- sowie gegebenenfalls Poly(Tri,Tetra)carbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden. Beispiele für geeignete Diole sind Ethylenglykol, Butylenglykol, Diethylenglykol, Triethylenglykol, Polyalkylenglykole, wie Polyethylenglykol, weiterhin Propandiol, Butandiol(1,4), Hexandiol(1,6), Neopentylglykol oder Hydroxypivalinsäureneopentylglykolester, wobei die drei letztgenannten Verbindungen bevorzugt sind. Als gegebenenfalls mit einzusetzende Polyole sind hier beispielsweise Trimethylolpropan, Glycerin, Erythrit, Pentaerythrit, Trimethylolbenzol oder Trishydroxyethylisocyanurat zu nennen.

Als Dicarbonsäuren kommen beispielsweise in Frage:
Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, "Chlorendic"-Säure, Tetrachlorphthalsäure, Maleinsäure, Fumarsäure, Itaconsäure, Malonsäure, Korksäure, 2-Methylbernsteinsäure, 3,3-Diäthylglutarsäure, 2,2-Dimethylbernsteinsäure. Anhydride dieser Säuren sind ebenfalls brauchbar, soweit sie existieren. Die Anhydride werden infolgedessen durch den Ausdruck "Säure" mitumfaßt. Es können auch Monocarbonsäuren, wie Benzoesäure und Hexancarbonsäure verwendet werden, vorausgesetzt, daß die mittlere Funktionalität des Polyols höher als 2 ist. Gesättigte aliphatische oder aromatische Säuren sind bevorzugt, wie Adipinsäure oder Isophthalsäure. Als gegebenenfalls in kleineren Mengen mitzuverwendende polycarbonsäure sei hier Trimellitsäure genannt.

Die Hydroxycarbonsäure, die als Reaktionsteilnehmer bei der Herstellung eines Polyesterpolyols mit endständigem Hydroxyl verwendet werden können, sind u.a. beispielsweise Hydroxycapronsäure, Hydroxybuttersäure, Hydroxydecansäure, Hydroxystearinsäure und dergl. Brauchbare Lactone sind u.a. Caprolacton, Butyrolacton und dergl..

Die Menge an Komponente (B) in dem Polyurethanharz liegt üblicherweise zwischen 15 und 80 Gew.-%, vorzugsweise 40 und 60 Gew.-%, bezogen auf das Polyurethanharz.

Die gegebenenfalls zum Aufbau der Polyurethanharze eingesetzten niedermolekularen Polyole (C) bewirken in der Regel eine Versteifung der Polymerkette. Sie besitzen im allgemeinen ein Molekulargewicht von etwa 60 bis 400, vorzugsweise 60 bis 200 und Hydroxylzahlen von beispielsweise 200 bis 1500. Sie können aliphatische, alicyclische oder aromatische Gruppen enthalten. Ihre Menge liegt im allgemeinen bei 0 bis 20, vorzugsweise 1 bis 10 Gew.-%, bezogen auf die Polyolkomponenten (B) bis (D). Genannt seien hier beispielsweise die niedermolekularen Polyole mit bis zu etwa 20 Kohlenstoffatomen je Molekül, z.B. Ethylenglykol, Diethylenglykol, 1,2-Propandiol, 1,3-Propandiol, 1,4-Butandiol, 1,3-Butylenglykol, Cyclohexandiol, 1,4-Cyclohexandimethanol, 1,6-Hexandiol, Bisphenol A (2,2-Bis(4-hydroxphenyl)propan), hydriertes Bisphenol A (2,2-Bis(4-hydroxycyclohexyl)propan) sowie deren Mischungen, sowie als Triol, Trimethylolpropan.

Für den Baustein (D) geeignete Verbindungen sind beispielsweise in den US-A 3 412 054 und 3 640 924 sowie in den DE-A 2 624 442 und 2 744 544 beschrieben, auf die hier Bezug genommen wird. Insbesondere kommen hierfür solche Polyole, vorzugsweise Diole, in Frage, die wenigstens eine Carboxyl-Gruppe, im allgemeinen 1 bis 3 Carboxyl-Gruppen je Molekül enthalten. Als zur Anionenbildung befähigte Gruppen sind auch Sulfonsäuregruppen geeignet. Beispiele hierfür sind: Dihydroxycarbonsäuren, wie α,α-Dialkylolalkansäuren, insbesondere α,α-Dimethylolalkansäuren, wie 2,2-Dimethylolessigsäure, 2,2-Dimethylolpropionsäure, 2,2-Dimethylolbuttersäure, 2,2-Dimethylolpentansäure, Dihydroxybernsteinsäure, weiterhin Polyhydroxysäuren, wie Glukonsäure. Besonders bevorzugt ist dabei 2,2-Dimethylolpropionsäure, Aminogruppenhaltige Verbindungen (D) sind beispielsweise α,δ-Diaminovaleriansäure, 2,4-Diamino-toluol-sulfonsäure-(5) udgl.. Es können auch Gemische dieser Verbindungen (D) zum Einsatz kommen. Die Menge an Komponente (D) in dem Polyurethanharz liegt im allgemeinen bei 2 bis 20, vorzugsweise bei 4 bis 10 Gew.-% bezogen auf das Polyurethanharz.

Das erfindungsgemäß eingesetzte Polyurethanharz enthält auch Bausteine (E), die sich jeweils an den Kettenenden befinden und diese abschließen (Kettenstopper). Diese Bausteine (E) leiten sich ab von Verbindungen, die neben einer OH-Gruppe auch COOH-Gruppen oder neben einer Aminogruppe (primär oder sekundär) auch OH-Gruppen aufweisen, wobei die letzteren bevorzugt sind. Beispiele hierfür sind Mono-Hydroxycarbonsäuren, wie Hydroxyessigsäure, Milchsäure oder Äpfelsäure, weiterhin Alkanolamine wie N-Aminoethylethanolamin, Ethanolamin, 3-Aminopropanol, Neopentanolamin und besonders bevorzugt Diethanolamin. Darüberhinaus kommen als Vebindungen (E) auch 3-Amino-1-Ethylaminopropan, 3-Amino-1-Cyclohexylaminopropan oder 3-Amino-1-Methylaminobutan in Frage.

Auf diese Weise werden zusätzlich funktionelle Gruppen in das polymere Endprodukt eingebracht und dieses damit reaktionsfähiger gegenüber Materialien, wie Härtern, gemacht. Die Menge an (E) in dem Polyurethanharz liegt üblicherweise zwischen 2 und 20, vorzugsweise 3 und 10 Gew.-%, bezogen auf das Polyurethanharz.

Zusätzlich zu den Bausteinen gemäß (E) kann das erfindungsgemäße Polyurethanharz auch noch Bausteine (F) enthalten, die sich von sogenannten Kettenverlängerern ableiten, wenngleich diese Variante weniger bevorzugt ist. Als solche kommen die hierfür bekannten, mit NCO-Gruppen reaktiven und vorzugsweise difunktionellen Verbindungen in Frage, die nicht identisch mit (B), (C), (D) und (E) sind und zumeist mittlere Molekulargewichte bis zu 400 aufweisen. Genannt seien hier beispielsweise Wasser, Hydrazin, Poly(Di)amine, wie Ethylendiamin, Diaminopropan, Hexamethylendiamin, die auch Substituenten, wie OH-Gruppen, tragen können. Solche Polyamine sind beispielsweise in der DE-A 36 44 371 beschrieben.

Die Herstellung des erfindungsgemäß eingesetzten Polyurethanharzes erfolgt bevorzugt in der Weise, daß man aus den Polyisocyanaten gemäß (A), den Polyolen gemäß (B) und gegebenenfalls den niedermolekularen Polyolen gemäß (C) sowie den Verbindungen gemäß (D) zunächst an Polyurethan-Präpolymeres herstellt, das im Mittel mindestens 1,7, vorzugsweise 2 bis 2,5 freie Isocyanatgruppen pro Molekül enthält, dieses Präpolymere dann mit Verbindungen gemäß (E) und/oder (F) in nicht-wäßrigem System umsetzt und das vollständig ausreagierte Polyurethanharz üblicherweise anschließend neutralisiert und ins wäßrige System überführt. Gegebenenfalls kann auch die Neutralisation sowie die Umsetzung mit (F) nach der Überführung ins wäßrige System erfolgen.

Das Polyurethan-Präpolymere wird nach bekannten Verfahren hergestellt. Hierbei wird das Polyisocyanat gegenüber den Polyolen (B) bis (D) im Überschuß eingesetzt, so daß ein Produkt mit freien Isocyanatgruppen resultiert. Diese Isocyanatgruppen sind end- und/oder seitenständig, vorzugsweise endständig. Zweckmäßigerweise ist dabei die Menge an Polyisocyanat so groß, daß das Äquivalentverhältnis von Isocyanatgruppen zur Gesamtzahl der OH-Gruppen in den Polyolen (B) bis (D) 1,05 bis 1,4, vorzugsweise 1,1 bis 1,3 beträgt.

Die Umsetzung zur Herstellung des Präpolymeren wird normalerweise bei Temperaturen von 60 bis 95° C, vorzugsweise 60 bis 75° C, je nach Reaktivität des eingesetzten Isocyanats, durchgeführt, in der Regel ohne Anwesenheit eines Katalysators, jedoch vorzugsweise in Gegenwart von gegenüber Isocyanaten inaktiven Lösungsmitteln. Hierfür kommen insbesondere solche Lösungsmittel in Betracht, die mit Wasser verträglich sind, wie die weiter unten genannten Ether, Ketone und Ester sowie N-Methylpyrrolidon. Die Menge dieses Lösungsmittels überschreitet zweckmäßigerweise nicht 20 Gew.-%, und liegt vorzugsweise im Bereich von 5 bis 15 Gew.-%, jeweils bezogen auf die Summe aus Polyurethanharz und Lösungsmittel. Zweckmäßigerweise wird dabei das Polyisocyanat der Lösung der übrigen Komponenten langsam zugegeben.

Das Präpolymere bzw. dessen Lösung wird dann mit der Verbindung gemäß (E) und/oder (F) umgesetzt, wobei die Temperatur zweckmäßigerweise im Bereich von 50 bis 100°C, vorzugsweise zwischen 60 und 90° C liegt, bis der NCO-Gehalt in dem Präpolymeren praktisch auf Null abgesunken ist. Hierzu wird die Verbindung (E) im Unterschluß oder in geringem Überschuß eingesetzt, wobei die Mengen zumeist 40 bis 110 %, vorzugsweise 60 bis 105 % der erforderlichen stöchiometrischen Menge betragen. Falls zur Herstellung des Präpolymeren weniger reaktive Diisocyanate benutzt werden, kann diese Umsetzung gleichzeitig mit der Neutralisation auch in Wasser erfolgen. Ein Teil der (nicht neutralisierten) COOH-Gruppen, vorzugsweise 5 bis 30 %, kann gegebenenfalls mit difunktionellen, mit COOH-Gruppen reaktiven Verbindungen, wie Diepoxyden, umgesetzt werden.

Zur Neutralisation des resultierenden, vorzugsweise COOH-Gruppen enthaltenden Produktes sind insbesondere tertiäre Amine geeignet, z.B. Trialkylamine mit 1 bis 12, vorzugsweise 1 bis 6 C-Atomen in jedem Alkylrest. Beispiele hierfür Trimethylamin, Triethylamin, Methyldiethylamin, Tripropylamin. Die Alkylreste können beispielsweise auch Hydroxylgruppen tragen, wie bei den Dialkylmonoalkanol-, Alkyldialkanol- und Trialkanolaminen. Beispiel hierfür ist Dimethylethanolamin, das bevorzugt als Neutralisationsmittel dient.

Als Neutralisationsmittel sind gegebenenfalls auch anorganische Basen, wie Ammoniak oder Natrium- bzw. Kaliumhydroxid einsetzbar.

Das Neutralisationsmittel wird zumeist im Molverhältnis zu den COOH-Gruppen des Präpolymers von ca. 0,3:1 bis 1,3:1, vorzugsweise von ca. 0,5:1 bis 1:1 eingesetzt.

Die Neutralisation, die in der Regel zwischen Raumtemperatur und 80° C, vorzugsweise 40 bis 80° C erfolgt, kann in beliebiger Weise durchgeführt werden, z.B. so, daß das wasserhaltige Neutralisationsmittel dem Polyurethanharz zugegeben wird oder umgekehrt. Es ist aber auch möglich, daß man zuerst das Neutralisationsmittel dem Polyurethanharz zufügt und danach erst das Wasser. Im allgemeinen erhält man so Festkörpergehalte von 20 bis 70 %, bevorzugt 30 bis 50 %.

Der Gehalt an Polyurethanharz in der wäßrigen Füllerzusammensetzung beträgt im allgemeinen 5 bis 40, vorzugsweise 15 bis 30 Gew.-%, bezogen auf die gesamte Füllerzusammensetzung.

Neben dem Polyurethanharz kann die wäßrige Füllerzusammensetzung als Bindemittel noch bis zu 60, vorzugsweise bis zu 30 Gew.-%, bezogen auf das Polyurethanharz, anderer oligomerer oder polymerer Materialien enthalten, wie vernetzungsfähige, wasserlösliche oder wasserdispergierbare Phenolharze, Polyesterharze, Epoxidharze oder Acrylharze etc., wie beispielsweise in der EP-Offenlegungsschrift 89 497 beschrieben.

Als Vernetzungsmittel sind die für Polyolharze üblichen Härter geeignet, sofern sie wasserverträglich sind. Genannt seien hier beispielsweise wasserverträgliche (wasserlösliche oder wasserdispergierbare) Aminoharze, insbesondere handelsübliche veretherte Melamin-Formaldehyd-Kondensate wie Hexamethoxymethylmelamin, Phenolharze oder blockierte Polyisocyanate, wie beispielsweise in der DE-A 36 44 372 beschrieben.

Die Menge an Vernetzungsmittel liegt üblicherweise bei 10 bis 35 Gew.-%, vorzugsweise 15 bis 25 Gew.-%, bezogen auf die Summe aus zu vernetzendem Bindemittel und Vernetzer.

Die wäßrige Füllerzusammensetzung gemäß der Erfindung, deren pH-Wert zumeist etwa im Bereich von 6,0 bis 10,0, vorzugsweise 6,8 bis 8,5 liegt, kann noch die üblichen Lackadditive, wie Pigmente und Füllstoffe sowie Lackhilfsmittel, z.B. Antiabsetzmittel, Entschäumungs- und/oder Netzmittel, Verlaufmittel, Reaktiv-Verdünner, Weichmacher, Katalysatoren, Hilfslösemittel, Verdicker undgl. enthalten. Zumindest ein Teil dieser Additive kann der Füllerzusammensetzung erst unmittelbar vor der Verarbeitung zugegeben werden. Die Auswahl und die Dosierung dieser Stoffe, die den Einzelkomponenten und/oder der Gesamtmischung zugegeben werden können, sind dem Fachmann bekannt.

Als Pigmente sind beispielsweise Eisenoxide, Bleioxide, Bleisilikate, Titandioxid, Bariumsulfat, Zinkoxid, Zinksulfid, Phthalocyaninkomplexe etc. zu nennen, und als Füllstoffe Glimmer, Kaolin, Kreide, Quarzmehl, Asbestmehl, Schiefermehl, verschiedene Kieselsäuren, Silikate sowie Talkum, inklusive von sog. Mikrotalkum, mit einer Kornfeinheit von maximal 10 »m (vgl. EP-A 249.727). Diese Pigmente und/oder Füllstoffe werden üblicherweise in Mengen von 10 bis 70, vorzugsweise von 30 bis 50 Gew.-%, bezogen auf den Gesamtfestkörpergehalt der Füllerzusammensetzung, eingesetzt.

Als Katalysatoren kommen hier die üblichen sauren Härtungskatalysatoren in Frage, wie p-Toluolsulfonsäure, Dodecylbenzolsulfonsäure etc.

Die Hilfslösemittel, beispielsweise Ether, wie Dimethyl(diethyl)glykol, Dimethyl(diethyl)diglykol, Tetrahydrofuran, Ketone wie Methylethylketon, Aceton, Cyclohexanon, Ester, wie Butylacetat, Ethylglykolacetat, Methylglykolacetat, Methoxypropylacetat, Alkohole, wie Ethanol, Propanol, Butanol werden, wenn überhaupt, aus Gründen der Umweltfreundlichkeit nur in möglichst geringer Menge verwendet, die in der Regel 10, vorzugsweise 1 bis 5 Gew.-%, bezogen auf Wasser (als dem hauptsächlichen Verdünnungsmittel) nicht überschreitet. Die Menge an Wasser in der wäßrigen Füllerzusammensetzung liegt zumeist bei 15 bis 80 Gew.-%, vorzugsweise 30 bis 60 Gew.-%, bezogen auf die gesamte Füllerzusammensetzung.

Die Herstellung der wäßrigen Füllerzusammensetzung erfolgt nach den üblichen Methoden der Lackherstellung, wie beispielsweise aus der weiter unten angegebenen Richtrezeptur ersichtlich.

Der Auftrag der wäßrigen Füllerzusammensetzungen, die mit Wasser unendlich verdünnbar sind und deren Gesamtfestkörpergehalt (125° C/2 Std.) im allgemeinen 35 bis 75, vorzugsweise 40 bis 60 Gew.-% beträgt, geschieht in bekannter Weise, beispielsweise durch Spritzen nach dem Druckluftverfahren oder mittels luftloser oder elektrostatischer Spritzverfahren. Zur Härtung der aufgebrachten Füllerschichten werden im allgemeinen Temperaturen von 120 bis 200°C, vorzugsweise 150 bis 170° C, angewendet. Die Härtungsdauer liegt im allgemeinen bei 15 bis 30 Minuten, vorzugsweise 18 bis 20 Minuten.

Die so erhaltenen vernetzten Füllerbeschichtungen zeichnen sich insbesondere durch verbesserte Steinschlagfestigkeit bei tiefen Temperaturen (0°C bis -30°C) sowie durch gute Zwischenschichthaftung aus. Außerdem besitzen sie eine gute Reißdehnung, sowie eine ausgezeichnete Schlagzähigkeit. Die Beständigkeit gegen Luftfeuchtigkeit und Lösungsmittel ist ebenfalls sehr gut.

Die nachfolgenden Beispiele erläutern die Erfindung.

### Beispiel 1

Aus 282,8 g eines Polyesters mit dem Molekulargewicht von 1020, hergestellt aus Adipinsäure, Hexandiol(1,6) Neopentylglykol und 42,9 g Dimethylolpropionsäure, und 75 g N-Methylpyrrolidon wurde eine Mischung hergestellt und diese auf 100°C erhitzt. Die so erhaltene, klare Lösung wurde auf ca. 60° abgekühlt und anschließend bei dieser Temperatur 121,8 g eines Gemisches aus 2,4- und 2,6-Toluylendiisocyanat so zugetropft, daß die Temperatur 65°C bis 70°C nicht überstieg. Anschließend wurde so lange bei dieser Temperatur gerührt, bis der Isocyanat-Wert 1,6 % (= 2 Isocyanatgruppen pro Molekül) erreicht hatte. Dann wurden 21,0 g Diethanolamin zugegeben, wobei die Schmelze gut rührbar blieb. Nach Neutralisation mit 22,4 g Dimethylethanolamin wurde das fertige Polyurethanharz durch Zugabe von 625 g deionisiertem Wasser dispergiert. Man erhielt eine klare, ca. 40 %-ige Dispersion mit einer Viskosität von 1050 mPas.

### Beispiel 2

220,5 g eines Polyesters mit der Molmasse 984, hergestellt aus Isophthalsäure, Adipinsäure, Neopentylglykol und Hexandiol(1,6) wurden unter Stickstoff mit 56,6 g eines OH-funktionellen Leinölfettsäureesters, 42,9 g Dimethylolpropionsäure und 100 g N-Methylpyrrolidon gemischt und auf 100°C erhitzt. Man kühlte auf 60°C ab und tropfte dann ein Isomerengemisch aus 2,4- und 2,6-Toluylendiisocyanat so zu, daß die Temperatur 70°C nicht überschritt. Nach Erreichen des berechneten Isocyanat-Wertes von 1,6 % (= 2 Isocyanatgruppen pro Molekül), wurden 21,0 g Diethanolamin zugegeben. Die 80°C heiße Lösung wurde dann unter kräftigem Rühren in 700 g deionisiertes Wasser, dem 22,8 g Dimethylethanolamin zugesetzt wurden, gegossen. Es entstand eine klare Dispersion mit 38 % Festkörper und einer viskosität von 1000 mPas.

### Beispiel 3

235,6 g eines Polyesters mit der Molmasse von 1020, hergestellt aus Adipinsäure, Hexandiol(1,6) und Neopentylglykol wurden mit 56,0 g Polytetrahydrofuran (M= 1000), 42,9 g Dimethylolpropionsäure und 75 g N-Methylpyrrolidon gemischt und auf die in Beispiel 1 beschriebene Weise mit Toluylendiisocyanat umgesetzt. Nach Reaktion des Prepolymeren mit Diethanolamin wurde mit 22,8 g Dimethylethanolamin neutralisiert und mit 620 g deionisiertem Wasser dispergiert.

### Beispiel 4

Eine Polyurethandispersion wurde auf die in Beispiel 1 beschriebene Weise hergestellt, mit dem Unterschied, daß 15 % des Polyesters durch Trimethylolpropan ersetzt wurden. Die so erhaltene Dispersion war klar und hatte eine Viskosität von 1380 m Pas.

### Beispiel 5

317,1 g eines polyesters mit dem Molekulargewicht von 1130, hergestellt aus Adipinsäure, Hexandiol, Neopentylglykol und Terephthalsäure wurden mit 42,9 g Dimethylolpropionsäure und 90 g N-Methylpyrrolidon gemischt und auf 100°C erhitzt. Nach Abkühlen auf 65°C wurden 183,7 g 4,4′-Diisocyanatodicyclohexylmethan (Desmodur W) zugestropft und der Reaktionsansatz anschließend bei 80°C gehalten, bis der berechnete Isocyanat-Wert von 1,33 % (= 2 Isocyanatgruppen pro Molekül) erreicht war. Man gab 21,0 g Diethanolamin und anschließend 22,8 g Dimethylethanolamin zu und rührte noch 20 min nach. Dann wurde durch Zugabe von 700 g deionsiertem Wasser das Polyurethan-Harz dispergiert.

### Richtrezeptur zur Füllerformulierung

58,0 Teile Bindemittel aus Beispiel 1-5 wurden mit 4,0 Teilen eines handelsüblichen Melamin-Formaldehyd-Kondensats, 13,3 Teilen Titandioxid, 13,2 Teilen Bariumsulfat (Blanc fix micro), 0,1 Teilen Ruß, 11,1 Teilen deionisiertem Wasser sowie 0,3 Teilen der üblichen Lackhilfsmittel in einer Perlmühle dispergiert (20 min, 6000 U/min).

Die Applikation der Füllerzusammensetzung erfolgte mittels Druckblattpistole auf ein mit einer kathodisch abgeschiedenen Elektrotauchgrundierung beschichtetes (ca 30 »m), zinkphosphatiertes Stahlblech. Die Härtung des Füllers wurde im Umluftofen, 10 min bei 80°C, anschließend 20 min bei 160°C (Trockenfilmstärke 35 ± 2 »m) durchgeführt. Auf die Füllerschicht wurde ein handelsüblicher Alkyd-Melamin-Automobillack aufgebracht und 30 min bei 130°C eingebrannt (Trockenfilmstärke ca. 30 ± 5 »m).

Die Prüfergebnisse sind in der nachfolgenden Tabelle 1 zusammengefaßt. Die Beständigkeitseigenschaften der Filme (Lösungsmittel-, Wasserfestigkeit) entsprechen den Praxisanforderungen.

### Decklackstand

Glanz und Oberfläche des Decklacks auf den verschiedenen Füllermaterialien wurden subjektiv nach einer Notenskala bewertet (1 = sehr gut, 5 = sehr schlecht).

### Steinschlagfestigkeit

Wurde mittels Steinschlag-Prüfgerät nach VDA (Fa. Erichsen, Modell 508) geprüft. Für die vorliegende Prüfung wurde jeweils 1 kg Stahlschrot (kantig, 4 - 5 mm), beschleunigt durch Druckluft (2 bar), auf die Prüfbleche geschossen. Bewertet wurden, anhand von Musterblechen, die Decklackhaftung (0 = keine Abplatzungen vom Füller, 10 = vollständige Enthaftung) und die Durchschläge bis auf das Blech (0 = kein Durchschlag, 10 = sehr viele Durchschläge).

**Tabelle 1**

| Beispiel | 1 | 2 | 3 | 4 | 5 |
|---|---|---|---|---|---|
| Decklackstand | 2 | 2 | 2 | 2 | 1-2 |
| Decklackhaftung | | | | | |
| + 20° C | 1-2 | 2-3 | 2 | 2-3 | 1 |
| - 20° C | 1-2 | 2-3 | 2 | 2-3 | 1 |
| Durchschläge | | | | | |
| + 20° C | 0 | 1 | 0-1 | 2 | 0 |
| - 20° C | 1 | 2 | 1 | 2 | 0 |
| Gitterschnitt (nach DIN 53151) | Gt 0 | Gt 0 | Gt 0 | Gt 0 | Gt 0 |
| Erichsentiefung (nach DIN 53156) | 5,9 | 6,8 | 6,6 | 6,4 | 6,2 |

### Beispiel 6

233 g eines Polyesters mit der Molmasse 832, hergestellt aus Hexandiol (1,6), Neopentylglykol und Adipinsäure, wurden mit 42,9 g Dimethylolpropionsäure und 75 g N-Methylpyrrolidon gemischt und auf 110°C erhitzt. Man kühlte auf 65°C ab und tropfte dann 121,8 g eines Isomerengemisches auf 2,4- und 2,6-Toluylendiisocyanat so zu, daß die Temperatur 70°C nicht überschritt.
Nach Erreichen des berechneten Isocyanat-wertes von 1,8 % wurden 21 g Diethanolamin zugegeben.
Das Harz wurde auf 140°C erhitzt und portionsweise 33,6 g eines Epoxidharzes (EV = 460) zugegeben.
Der auf 90°C abgekühlten Lösung wurden 24,1 g Dimethylethanolamin zugesetzt.
Anschließend wurde mit 800 g heißem, deionisiertem Wasser dispergiert.

### Beispiel 7

233 g eines Polyesters mit der Molmasse 832, hergestellt aus Hexandiol (1,6), Neopentylglykol und Adipinsäure, wurden mit 42,9 g Dimethylolpropionsäure und 75 g N-Methylpyrrolidon gemischt und auf 110°C erhitzt. Man kühlte auf 65°C ab und tropfte dann 121,8 g eines Isomerengemisches aus 2,4- und 2,6-Toluylendiisocyanat so zu, daß die Temperatur 70°C nicht überschritt.
Nach Erreichen des berechneten Isocyanat-Wertes von 1,8 % wurde eine Mischung aus 16,8 g Diethanolamin und 1,2 g Hexamethylendiamin zugesetzt.
Anschließend wurden 19,3 g Dimethylethanolamin zugegeben und mit 630 g heißem deionisiertem Wasser dipergiert.

### Beispiel 8

259 g eines Polyesters mit der Molmasse 925, hergestellt aus Hexandiol (1,6), Neopentylglykol, Adipinsäure und Isophthalsäure, wurden mit 42,9 g Dimethylpropionsäure und 75 g N-Methylpyrrolidon gemischt und auf 110°C erhitzt.

Man kühlte auf 65°C ab und tropfte dann 121,8 g eines Isomerengemischs aus 2,4- und 2,6-Toluylendiisocyanat so zu, daß die Temperatur 70°C nicht überschritt.
Nach Erreichen des berechneten Isocyanat-Wertes von 1,7 % wurden 11,6 g Hexamethylendiamin zugegeben.
Anschließend wurden 20 g Dimethylethanolamin zugegeben und mit 670 g heißem deionisiertem Wasser dispergiert.

## Patentansprüche

1. Verwendung eines wasserdispergierbaren Polymeren als Bindemittel in einer wäßrigen Füllerzusammensetzung, die gegebenenfalls neben weiteren polymeren Bindemitteln, Vernetzungsmittel und übliche Additive enthält, dadurch gekennzeichnet, daß das wasserdispergierbare Polymere ein Polyurethanharz ist, das erhalten wird durch Umsetzung von
(A) Polyisocyanaten,
(B) Polyolen mit einem mittleren Molekulargewicht Mₙ, von mindestens 400,
(C) gegebenenfalls Polyolen mit einem Molgewicht von 60 bis 400,
(D) Verbindungen, die mindestens zwei gegenüber Isocyanatgruppen reaktive Gruppen und mindestens eine zur Anionenbildung befähigte Gruppe aufweisen,
unter Bildung eines Polyurethan-Präpolymeren, das im Mittel mindestens 1,7 freie Isocyanatgruppen pro Molekül enthält, dieses Präpolymer dann in einem nichtwäßrigen System mit Verbindungen (E) und gegebenenfalls (F) umsetzt und das vollständig ausreagierte Polyurethanharz anschließend neutralisiert und in ein wäßriges System überführt oder zuerst in ein wäßriges System überführt und dann neutralisiert,
wobei die Verbindungen (E) entweder
e1) Hydroxyl- und Carbonylgruppen enthalten, oder
e2) Amino- und Hydroxylgruppen enthalten, oder
e3) gewählt werden aus 3-Amino-1-Methylaminopropan,
3-Amino-1-Ethylaminopropan,
3-Amino-1-cyclohexylaminopropan, oder
3-Amino-1-Methylaminobutan,
und die Verbindungen (F) Wasser, Hydrazin oder von (D) und (E) verschiedene Di- oder Polyamine darstellen.

2. Verwendung nach Anspruch 1, dadurch gekennzeichnet, daß die Menge an Polyurethanharz in der wäßrigen Füllerzusammensetzung 5 bis 40 Gew.-%, bezogen auf die gesamte Füllerzusammensetzung, beträgt.

3. Verwendung nach Anspruch 1 und/oder 2, dadurch gekennzeichnet, daß die wäßrige Füllerzusammensetzung noch mindestens ein weiteres Bindemittel in einer Menge von bis 60 Gew.-%, bezogen auf das Polyurethanharz, enthält.

4. Verwendung nach mindestens einem der Ansprüche 1 bis 3, dadurch gekennzeichnet, daß sie 10 bis 35 Gew.-%, bezogen auf die Summe an zu vernetzendem Bindemittel und Vernetzer, an wasserverträglichen Aminharzen als Vernetzer enthält.

5. Verwendung nach mindestens einem der Ansprüche 1 bis 4, dadurch gekennzeichnet, daß das Polyurethanharz ein mittleres Molekulargewicht M̅ₙ von 2000 bis 6000 aufweist.

6. Verwendung nach mindestens einem der Ansprüche 1 bis 5, dadurch gekennzeichnet, daß die Hydroxylzahl des Polyurethanharzes bei 30 bis 80 liegt.

7. Verwendung nach mindestens einem der Ansprüche 1 bis 6, dadurch gekennzeichnet, daß die Menge der Bausteine (A) 10 bis 50 Gew.-%, der Bausteine (B) 15 bis 80 Gew.-%, der Bausteine (C) 0 bis 20 Gew.-%, der Bausteine (D) 2 bis 20 Gew.-% und der Bausteine (E) 2 bis 20 Gew.-%, jeweils bezogen auf das Polyurethanharz, beträgt.

8. Verwendung nach mindestens einem der Ansprüche 1 bis 7, dadurch gekennzeichnet, daß sich der Baustein (B) von Polyether- oder Polyesterpolyolen mit mittleren Molekulargewichten M̅ₙ von 400 bis 5000 ableitet.

9. Verwendung nach mindestens einem der Ansprüche 1 bis 8, dadurch gekennzeichnet, daß es sich bei den Verbindungen gemäß (D) um Polyole handelt, die wenigstens eine Carboxylgruppe enthalten.

10. Verwendung nach Anspruch 9, dadurch gekennzeichnet, daß (D) eine α,α-Dimethylolalkansäure ist.

11. Verwendung nach mindestens einem der Ansprüche 1 bis 10, dadurch gekennzeichnet, daß es sich bei den Verbindungen gemäß (E) um Monoamine handelt, die noch mindestens eine OH-Gruppe enthalten.

12. Verwendung nach mindestens einem der Ansprüche 1 bis 11, dadurch gekennzeichnet, daß es sich bei den Verbindungen (F) um Wasser, Hydrazin oder Diamine, die vorzugsweise OH-Gruppen enthalten, handelt.

13. Substrate, beschichtet mit der Füllerzusammensetzung gemäß mindestens einem der Ansprüche 1 bis 12.

14. Beschichtete Substrate nach Anspruch 13, dadurch gekennzeichnet, daß es sich um Autokarosserien handelt.

## Claims

1. The use of a water-dispersible polymer as binder in an aqueous filler composition which may or may not comprise, in addition to other polymeric binders, crosslinking agents and the customary additives, wherein the water-dispersible polymer is a polyurethane resin which is obtained by reacting
(A) polyisocyanates,
(B) polyols having an average molecular weight Mₙ of at least 400,
(C) polyols having a molecular weight of 60 to 400 if desired,
(D) compounds containing at least two groups reactive toward isocyanate groups and at least one group capable of forming anions,
to form a polyurethane prepolymer which contains, on average, at least 1.7 free isocyanate groups per molecule, then reacting this prepolymer in a nonaqueous system with compounds (E) and if desired (F), and subsequently neutralizing the fully reacted polyurethane resin and converting it into an aqueous system, or first converting it into an aqueous system and then neutralizing it,
the compounds (E) containing either
(e1) hydroxyl and carbonyl groups, or
(e2) amino and hydroxyl groups, or
(e3) being selected from 3-amino-1-methylaminopropane, 3-amino-1-ethylaminopropane, 3-amino-1-cyclohexylaminopropane, or 3-amino-1-methylaminobutane,
and the compounds (F) representing water, hydrazine or di- or polyamines which are different from (D) and (E).

2. The use as claimed in claim 1, wherein the proportion of polyurethane resin in the aqueous filler composition is 5 to 40 % by weight, based on the total filler composition.

3. The use as claimed in claim 1 and/or 2, wherein the aqueous filler composition still contains at least one other binder in an amount of up to 60 % by weight, based on the polyurethane resin.

4. The use as claimed in at least one of the claims 1 to 3, wherein the aqueous filler composition contains 10 to 35 % by weight, based on the total of the binder to be crosslinked and crosslinking agent, of water-compatible amino resins as crosslinking agents.

5. The use as claimed in at least one of the claims 1 to 4, wherein the polyurethane resin has an average molecular weight Mₙ of 2,000 to 6,000.

6. The use as claimed in at least one of the claims 1 to 5, wherein the hydroxyl value of the polyurethane resin is about 30 to 80.

7. The use as claimed in at least one of the claims 1 to 6, wherein the amount of the building blocks (A) is 10 to 50 % by weight, that of the building blocks (B) is 15 to 80 % by weight, that of the building blocks (C) is 0 to 20 % by weight, that of the building blocks (D) is 2 to 20 % by weight and that of the building blocks (E) is 2 to 20 % by weight, in each case based on the polyurethane resin.

8. The use as claimed in at least one of the claims 1 to 7, wherein the building block (B) is derived from polyether polyols or polyester polyols having average molecular weights Mₙ of 400 to 5,000.

9. The use as claimed in at least one of the claims 1 to 8, wherein the compounds according to (D) are polyols containing at least one carboxyl group.

10. The use as claimed in claim 9, wherein (D) is a α,α-dimethylolalkanoic acid.

11. The use as claimed in at least one of the claims 1 to 10, wherein the compounds according to (E) are monoamines containing at least one OH group.

12. The use as claimed in at least one of the claims 1 to 11, wherein the compounds (F) are water, hydrazine or diamines containing preferably OH groups.

13. A substrate coated by the filler composition according to at least one of the claims 1 to 12.

14. The coated substrate as claimed in claim 13, wherein the substrate is a motor vehicle body.

## Revendications

1. Emploi d'un polymère hydrodispersable comme liant dans une composition de charge aqueuse pouvant comprendre aussi éventuellement d'autres liants polymères, agents réticulants et additifs courants, emploi caractérisé en ce que le polymère hydrodispersable est une résine de polyuréthanne obtenue par réaction
(A) de polyisocyanates avec
(B) des polyols à masse moléculaire moyenne Mₙ d'au moins 400,
(C) éventuellement des polyols de masse moléculaire 60 à 400 et
(D) des composés ayant au moins deux groupes réactifs avec les isocyanates et un ou plusieurs groupes aptes à former des anions,
ce qui forme un prépolymère de polyuréthanne avec en moyenne par molécule au moins 1,7 groupe isocyanate libre, prépolymère que l'on fait ensuite réagir dans un milieu non-aqueux avec des composés (E) et le cas échéant (F) puis on neutralise la résine de polyuréthanne totalement formée et on la met dans un milieu aqueux, ou bien on la met d'abord dans le milieu aqueux puis on la neutralise, les composés (E) comportant
e1) des groupes hydroxyliques et cabonyliques ou
e2) des groupes amino et hydroxyliques, ou bien
e3) étant choisis parmi
le 3-amino-1-méthylaminopropane,
le 3-amino-1-éthylaminopropane,
le 3-amino-1-cyclohexylaminopropane, et
le 3-amino-1-méthylaminobutane,
et les composés (F) sont l'eau, l'hydrazine ou bien des diamines ou polyamines différentes des composés (D) et (E).

2. Emploi selon la revendication 1, caractérisé en ce que la teneur en résine de polyuréthanne de la composition aqueuse est de 5 à 40 % du poids de la composition totale.

3. Emploi selon la revendication 1 et/ou 2, caractérisé en ce que la composition contient encore au moins un autre liant dans une proportion pouvant s'élever jusqu'à 60 % du poids de la résine de polyuréthanne.

4. Emploi selon une ou plusieurs des revendications 1 à 3, caractérisé en ce que la composition contient de 10 à 35 %, du poids de l'ensemble du réticulant et du liant à réticuler, de résines d'amines compatibles avec l'eau comme autres réticulants.

5. Emploi selon une ou plusieurs des revendications 1 à 4, caractérisé en ce que la résine de polyuréthanne a une masse moléculaire moyenne M̅ₙ de 2 000 à 6 000.

6. Emploi selon une ou plusieurs des revendications 1 à 5, caractérisé en ce que l'indice d'hydroxyle de la résine de polyuréthanne est de 30 à 80.

7. Emploi selon une ou plusieurs des revendications 1 à 6, caractérisé en ce que la proportion des composants (A) est de 10 à 50 % en poids, celle des composants (B) de 15 à 80 % en poids, celle des composants (C) de 0 à 20 % en poids, celle des composants (D) de 2 à 20 % en poids et celle des composants (E) de 2 à 20 % en poids, proportions rapportées à la résine de polyuréthanne.

8. Emploi selon une ou plusieurs des revendications 1 à 7, caractérisé en ce que les composants (B) proviennent de polyéthers- ou de polyesters-polyols de masses moléculaires moyennes M̅ₙ 400 à 5 000.

9. Emploi selon une ou plusieurs des revendications 1 à 8, caractérisé en ce que les composés (D) sont des polyols avec au moins un groupe carboxylique.

10. Emploi selon la revendications 9, caractérisé en ce que le composant (D) est un α,α-diméthylolalcanoïque.

11. Emploi selon une ou plusieurs des revendications 1 à 10, caractérisé en ce que les composés (E) sont des monoamines avec encore au moins un groupe OH.

12. Emploi selon une ou plusieurs des revendications 1 à 11, caractérisé en ce que les composés (F) sont l'eau, l'hydrazine ou des diamines avec de préférence des groupes OH.

13. Substrats enduits d'une composition de charges selon l'une des revendications 1 à 12.

14. Substrats enduits selon la revendication 13, caractérisés en ce qu'il s'agit de carrosseries d'automobiles.
